# EUROPEAN PATENT APPLICATION

(11) **EP 1 953 265 A1**
(43) Date of publication of application: **06.08.2008**
(21) Application number: 05809133.1
(22) Date of filing: 25.11.2005
(51) Int. Cl.: C23C 26/00

(54) **ELECTRIC DISCHARGE SURFACE TREATING METHOD AND ELECTRIC DISCHARGE SURFACE TREATING APPARATUS**

(71) Applicant: MITSUBISHI DENKI KABUSHIKI KAISHA, Chiyoda-ku, Tokyo 100-8310 (JP); Ishikawajima-Harima Heavy Industries Co., Ltd., Tokyo 135-8710 (JP)
(72) Inventor: GOTO, Akihiro, Tokyo 100-8310 (JP); AKIYOSHI, Masao, Tokyo 100-8310 (JP); NAKAMURA, Kazushi, Tokyo 100-8310 (JP); FURUKAWA, Takashi, Koto-ku, Tokyo 135-8710 (JP); OCHIAI, Hiroyuki, Koto-ku, Tokyo 135-8710 (JP); WATANABE, Mitsutoshi, Koto-ki, Tokyo 135-8710 (JP)
(74) Representative: HOFFMANN EITLE
(86) International application number: PCT/JP2005/021683
(87) International publication number: WO 2007/060729

(57) **Abstract**

It is an object of the present invention to obtain a discharge surface-treatment method and a discharge surface-treatment apparatus that are capable of performing treatment for forming a dense and relatively thick film. When a voltage is applied to the inter-electrode gap between a discharge electrode 21 and a workpiece 22 from a first power supply 23 and electric discharge occurs, a voltage for feeding a second discharge current of a current value higher than that of a first discharge current generated by the first power supply 23 is applied to the inter-electrode gap from a second power supply 28 for a short period to be superimposed on the first discharge current. Consequently, a discharge pulse current of a high current value and a short pulse width at least having rising speed equal to or higher than 40 A/µs flows to the inter-electrode gap. As a result, it is possible to melt only a necessary portion of an electrode material in a short time and include, at a high ratio, the electrode material melted in an electrode material moved to a workpiece side by thermal energy of electric discharge or a substance formed by combination of the electrode material. This makes it possible to form a film made of melted metal on a workpiece surface.

## Description

### TECHNICAL FIELD

The present invention relates to a discharge surface-treatment method and a discharge surface-treatment apparatus for forming a film on a surface of a workpiece using an electric discharge machining technology, and, more particularly to a discharge surface-treatment method and a discharge surface-treatment apparatus for forming a dense and relatively thick film.

### BACKGROUND ART

It is known that, under a high-temperature environment chrome (Cr) and Mo (molybdenum) act as lubricants when they get oxidized. Thus, conventionally, on a surface of a component on which a material having strength and lubricity under the high-temperature environment is required to be coated or built up, for example, a turbine blade of a gas turbine engine for airplanes, a film formed by a material containing Cr or Mo is built up thick by a method such as welding or thermal spraying.

The welding is a method of melting a material of a welding rod and depositing the material on a workpiece by generating an electric discharge between the workpiece and the welding rod. The thermal spraying is a method of melting a metal material and spraying the metal material on a workpiece to form a film.

The welding and the thermal spraying are performed manually and therefore require high skills. Thus, it is difficult to incorporate the work of the welding and the thermal spraying in a production line, resulting in an increase in cost. In particular, in the welding, the workpiece gets heated to high temperatures, so that if the workpiece is thin and/or fragile, such as directional control alloys including a single crystal alloy and a unidirectional coagulated alloy, welding crack tends to occur in the workpiece and yield becomes low.

A surface-treatment method (a discharge surface-treatment method) by electric discharge machining can solve the problems. The discharge surface-treatment method is a method of causing pulse-like electric discharge between an electrode, which is obtained by compression-molding metal powder, powder of a metal compound, or powder of ceramics, and a workpiece to form a film on a surface of the workpiece with energy of the electric discharge. The film is made of the material of the electrode itself or a substance formed by reaction between the materials of the electrode due to thermal energy. The discharge surface-treatment method is a known technology (see, for example, patent document 1 and nonpatent literatures 1 to 3).

For example, in an electrode manufacturing method disclosed in the patent document 1, supply of an electrode material by electric discharge is controlled while a certain degree of hardness is given to an electrode. A hard ceramic film is formed on a workpiece surface by sufficiently melting the material supplied.

In the nonpatent literatures 1 and 2, a method of forming a hard film by an electric discharge is described. In the nonpatent literature 3, it is reported that a thick film is formed by an electrode of WC-Co.

Patent Document 1: Japanese Patent No. 3227454
Nonpatent Literature 1: "Formation of Hard Layer on Metallic Material by EDM" A. Goto, T. Magara, T. Moro, H. Miyako,. Proc. International Symposium for Electro-machining (ISEM 12). 1998
Nonpatent literature 2: "DEVELOPMENT OF ELECTRICAL DISCHARGE COATING METHOD" A. Goto, T. Moro, M. Matsukawa, M. Akiyoshi, N. Saito, N. Mohri, Proc. International Symposium for Electro-machining (ISEM 13). 2001
Nonpatent literature 3: "Formation of Thick Film by Electrical Discharge Coating (EDC)" Akihiro Goto, Toshio Moro, Nagao Saito, Naotake Mohri. Mold technology (No. 319), 1999

### DISCLOSURE OF INVENTION

### PROBLEM TO BE SOLVED BY THE INVENTION

In the method disclosed in the patent document 1, a film formed is limited to a thin film having thickness not larger than about 10 micrometers. However, there is a demand for formation of a dense and relatively thick film having thickness equal to or larger than about 100 micrometers as a film required to have strength and lubricity under a high-temperature environment and a film used for building up in repair of a component. In the formation of a thick film by the discharge surface treatment, factors such as supply of a material from an electrode, melting of the material supplied on a workpiece surface, and a way of combination of the material and a workpiece material affect film affect the most. Thus, development of a new technology is necessary from such a viewpoint.

The present invention has been devised in view of the circumstances and it is an object of the present invention to obtain a discharge surface-treatment method and a discharge surface-treatment apparatus that are capable of performing treatment for forming a dense and relatively thick film.

### MEANS FOR SOLVING PROBLEM

To achieve the above objects, according to an aspect of the present invention, a discharge surface-treatment method of causing pulse-like electric discharge in inter-electrode gap between a discharge electrode, which is obtained by compression-molding any one of metal powder, powder of a metal compound, and powder of ceramics or a mixture of these kinds of powder, and a workpiece and forming a film made of an electrode material or a substance formed by reaction of the electrode material to thermal energy on a workpiece surface with energy of the electric discharge, includes a discharge detecting step of detecting occurrence of electric discharge in the inter-electrode gap; and a current supplying step of adjusting an amount of an electric current supplied to the inter-electrode gap and a time width in response to the detection of occurrence of the electric discharge at the discharge detecting step, generating a discharge pulse current of a high current value and a short pulse width at least having rising speed equal to or higher than 40 A/µs, and performing surface treatment.

According to the present invention, it is possible to melt only a necessary portion of an electrode material in a short time and include, at a high ratio, the electrode material melted in an electrode material moved to a workpiece side by thermal energy of electric discharge or a substance formed by combination of the electrode material. This makes it possible to form a film made of melted metal on a workpiece surface.

### EFFECT OF THE INVENTION

According to the present invention, there is an effect that it is possible to perform treatment for forming a dense and relatively thick film.

### BRIEF DESCRIPTION OF DRAWINGS

Fig. 1 is a graph for explaining the basic principles of a discharge surface-treatment method according to a first embodiment of the present invention (a characteristic diagram for explaining a relation between a material component and a discharge electrode and a film thickness);
Fig. 2 is a characteristic diagram for explaining a relation between treatment time and film thickness at for a discharge electrode that does not contain a material less easily forming carbide;
Fig. 3 is a diagram for explaining a method of forming a discharge electrode containing a material less easily forming carbide;
Fig. 4 is a schematic of a structure of an apparatus implementing the discharge surfaced treatment method according to the present invention;
Fig. 5 is a waveform chart of a voltage pulse and a current pulse for explaining a principle relation between a pulse voltage applied in the inter-electrode gap and a discharge pulse current flowing in the discharge surface-treatment apparatus shown in Fig. 4;
Fig. 6 is a diagram for explaining a mechanism of film formation;
Fig. 7 is a microphotograph (a sectional photograph and a surface photograph) of a state of a film formed on a workpiece;
Fig 8 is a block diagram of a structure of an apparatus implementing a discharge surface-treatment method according to a second embodiment of the present invention;
Fig. 9 is a waveform chart for explaining operations of the discharge surface-treatment apparatus shown in Fig. 8;
Fig. 10 is a characteristic diagram for explaining a relation between a pulse width of a discharge pulse current and a percentage of voids (denseness);
Fig. 11 is a microphotograph of a film formed by a discharge pulse current with a rising speed of 80 A/µs and a pulse width of 1 microsecond;
Fig. 12 a microphotograph for comparing, as a third embodiment of the present invention, states of films formed on workpieces under the same electric discharge conditions at the time when a material easily melted is contained in a discharge electrode and at the time when a material less easily melted is included in the discharge electrode;
Fig. 13 is a microphotograph of a state of a film formed using a discharge electrode that includes a material easily melted but is less easily melted because a particle diameter of powder forming the discharge electrode is large;
Fig. 14 is a waveform chart for explaining electric discharge conditions applied in a discharge surface-treatment method according to the third embodiment of the present invention;
Fig. 15 is a waveform chart of respective values of a discharge pulse current actually used;
Fig. 16 is a microphotograph of a film obtained by applying the discharge pulse current shown in Fig. 15;
Fig. 17 is a microphotograph of an example of peeling that occurs in a film; and
Fig. 18 is a diagram for explaining a process of occurrence of peeling in a film.

### EXPLANATIONS OF LETTERS OR NUMERALS

- 1: Co alloy powder
- 2: Upper punch of a mold
- 3: Lower punch of the mold
- 4: Die of the mold
- 11: Electrode for discharge surface treatment
- 12: Workpiece
- 13: Machining fluid
- 14: Power supply for discharge surface treatment
- 15: Arc column of electric discharge
- 17: Workpiece matrix
- 18: Film
- 19: Voids
- 21: Electrode for discharge surface treatment
- 22: Workpiece
- 23: First power supply
- 24: Switching element group
- 25: Resistor group
- 26: Control circuit
- 27: Machining fluid
- 28: Second power supply
- 29: Switching element
- 30: Resistor
- 31: Discharge detecting circuit

### BEST MODE(S) FOR CARRYING OUT THE INVENTION

Exemplary embodiments of a discharge surface-treatment method and a discharge surface-treatment apparatus according to the present invention are explained in detail below with reference to the drawings.

### First Embodiment

In this first embodiment, basic matters of a discharge surface-treatment method according to the present invention are explained. In the conventional discharge surface treatment, a compression-molded material containing impalpable powder of, for example, titanium (Ti) as a main component is used for an electrode to cause spark discharge between the electrode and a matrix (a workpiece) in a machining fluid (oil) with a dedicated pulse power supply. In the machining fluid, the electrode material melts with thermal energy at that point and Ti elutes. At the same time, the oil is exposed to the heat to dissolve and emit free carbon (C). Ti and C chemically bond together to change to hard carbide called titanium carbide (TiC), which is ceramics, and form a film on a matrix surface. Consequently, a hard film (a TiC film in the present example) is formed over the entire matrix surface. The matrix surface is finished as a matrix surface with characteristics such as heat conduction and a melting point changed.

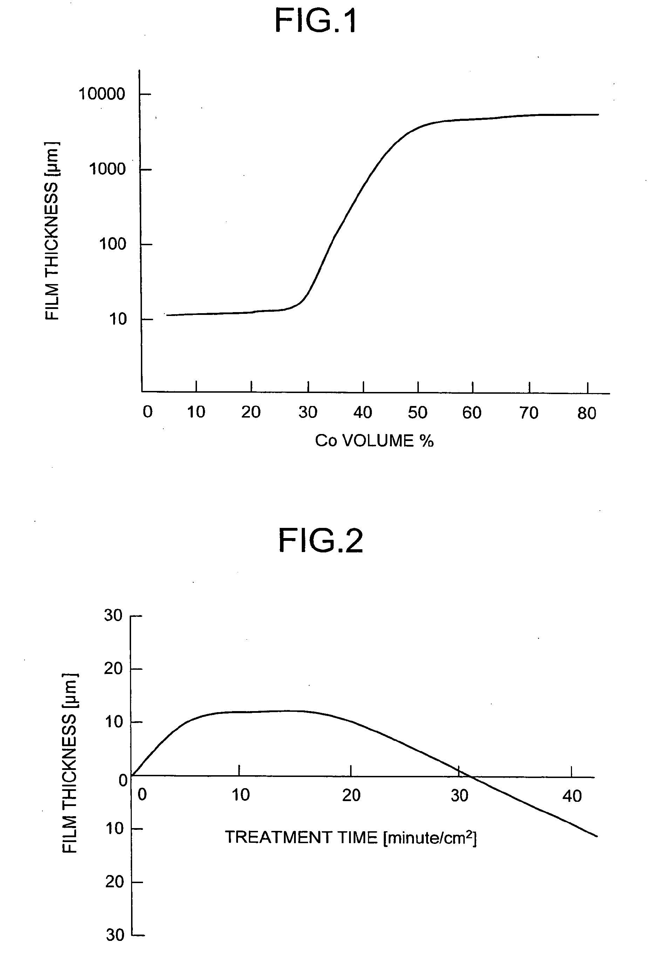

In this way, in electrode components used for the conventional discharge surface treatment, the electrode contains a large amount of materials (Ti, etc.) easily forming carbide. As a result of conducting an experiment by increasing a ratio of a material less easily carbonized (a material less easily generating carbide) contained in electrode components, the inventors have found that, when oil is used as a machining liquid, for example, as shown in Figs. 1 and 2, a material remaining in a film as metal increases and it is possible to form a dense and relatively thick film. In other words, it has been found that conditions in terms of materials of an electrode are important for formation of a dense and relatively thick film. Examples of the material not changed to carbide by electric discharge in oil and remaining in a film as metal in this way include Co, nickel (Ni), and iron (Fe).

First, details of the experiment are specifically explained with reference to Figs. 1 and 2. Fig. 1 is a characteristic diagram for explaining a relation between the material component of the discharge electrode and film thickness. The relation is a basic matter of the discharge surface-treatment method according to the present invention. The abscissa indicates Co volume % and the ordinate indicates film thickness (µm). Fig. 2 is a characteristic diagram for explaining a relation between treatment time and film thickness for a discharge electrode that does not contain a material less easily forming carbide. The abscissa indicates treatment time (minute/cm²) and ordinate indicates film thickness (µm).

The change in the film thickness (µs) when the content of cobalt (Co) (volume %), which is a material less easily forming carbide contained in an electrode, is increased to 0, 10, 20, ..., and 80 is shown in Fig. 1. Conditions of discharge surface treatment used in the experiment are as described below. The volume % in this context refers to a ratio between weight of each kind of powder to be mixed with density of each material. The volume % is a ratio of a volume occupied by the material in a volume of materials of the entire powder.

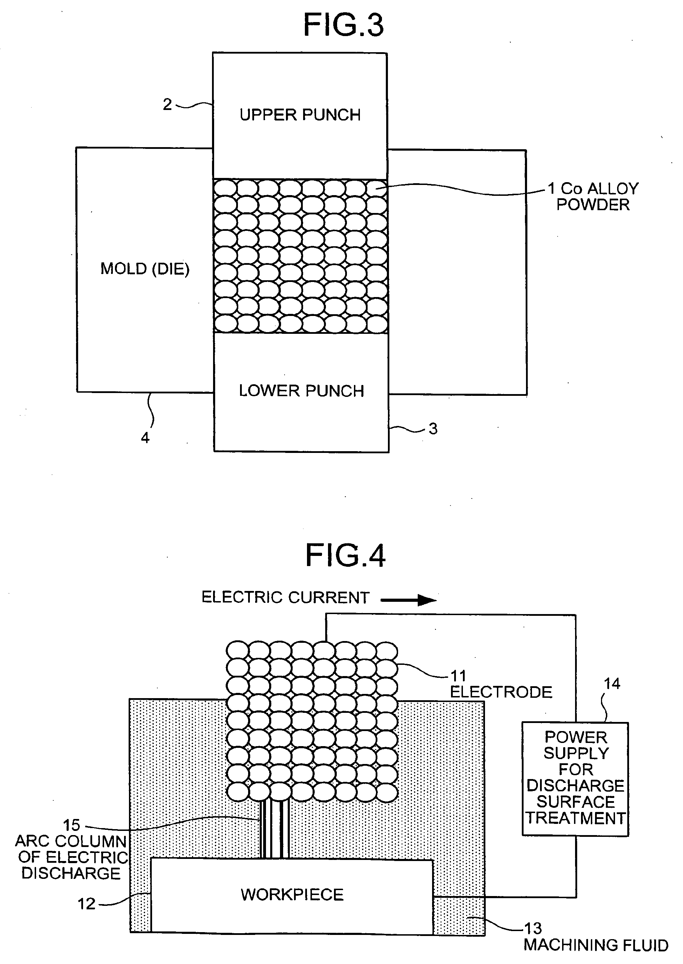

In other words, the electrode is an electrode manufactured by compression-molding, with a method shown in Fig. 3 described later, powder in which chromium carbide (Cr₃C₂) and Co are mixed and, then, heating the powder to increase electrode strength. A quantity (volume %) of Co in the manufacturing is changed to 0, 10, 20, ..., and 80. This electrode is formed in a square shape of 15mm×15mm and set in an apparatus implementing the discharge surfaced treatment method shown in Fig. 4 described later. A pulse voltage, which is minus at the electrode and plus at the matrix (the workpiece), is applied to the inter-electrode gap.

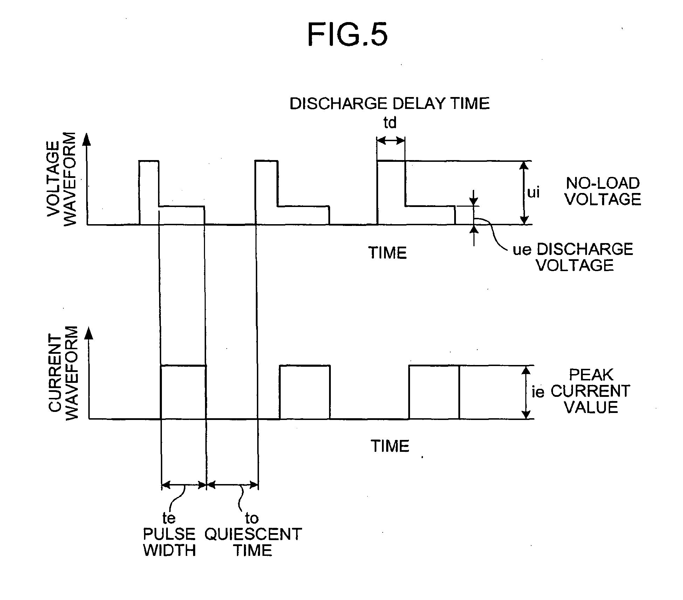

A relation between the pulse voltage applied and a flowing discharge pulse current is, in principle, as shown in Fig. 5 described later. In this experiment, a pulse voltage (Fig. 5(a)) at which a discharge pulse current (Fig. 5(b)) with discharge duration (a pulse width) te of 64 microseconds was obtained was applied at intervals of a quiescent time to (=128 microseconds). A treatment time for forming a film is 15 minutes.

It is seen that, as shown in Fig. 1, when a content (volume %) of Co is changed in the electrode manufactured, easiness of formation of a thick film changes. In Fig. 1, whereas a film thickness is about 10 microseconds when the Co content is low at 30 volume % or less, the film thickness gradually increases when the Co content exceeds about 30 volume %. The film thickness increases to be nearly 10000 micrometers when the Co content exceeds about 50 volume %.

In Fig. 1, the film thickness steeply increases when the Co content exceeds about 30 volume %. This is an average value obtained by conducting the experiment a plurality of times. Actually, when the Co content is about 30 volume %, the film may not be built up thick or, even if the film is build up thick, strength of the film may be low, that is, the film may be removed when the film is rubbed strongly by a metal piece or the like. Thus, the film thickness is not stable.

This is explained from another point of view. When a film is formed on a workpiece based on the conditions described above, when a Co content in an electrode is 0 volume %, that is, when chromium carbide is 100 weight %, as shown in Fig. 1, limit of thickness (µm) of a film that can be formed is about 10 micrometers. The thickness cannot be increased exceeding the limit. A relation of thickness (µm) of a film with respect to a treatment time (minute/cm²) at the time when a material less easily forming carbide such as Co is not present in an electrode is as shown in Fig. 2.

According to Fig. 2, at an initial stage of treatment, thickness of a film grows to increase with the time and thickness becomes saturated when a certain treatment time elapses (about 5 minutes/cm²). Thereafter, for a while, the film thickness does not grow. However, when the treatment is continued for a certain treatment time (about 20 minutes/cm²) or more, the thickness of the film starts to decrease. Finally, the film thickness changes to minus, that is, the film is dent. However, the film is still present in the dent state and thickness of the film is about 10 micrometers. This is substantially the same as the state of the film treated for an appropriate time.

In other words, Fig. 1 indicates that it is possible to form a film containing a metal component not changed to carbide and it is easy to form a dense thick film stably by increasing a material remaining in the film as metal. As a degree of content of a material less easily carbonized or a material not carbonized in an electrode, it is understood from Fig. 1 that the degree is preferably equal to or higher than 40 volume % and more preferably exceeds 50 volume %. According to the experiment, when the Co content in the electrode was 70 volume %, a stable and dense thick film with thickness of about 2 millimeters was successfully formed. This film is formed in a treatment time of 15 minutes. It is possible to form a thicker film if the treatment time is increased.

In the explanation with reference to Fig. 1, Co is used as a material less easily carbonized or a material not carbonized. However, as described above, as the material less easily forming carbide, there are Ni, Fe, and the like besides Co. It is possible to use these materials in the same manner.

It is understood that, by increasing the material remaining in the film as metal in this way, a film containing a metal component not changed to carbide can be formed and it is easy to form a dense thick film stably. Moreover, necessary conditions of formation are learned. Based on the results, a method of forming a film on a material on which it is desired to actually form a film is explained with reference to Figs. 3 to 7. As an example, a thick film is formed using an electrode obtained by compression-molding powder of a Co alloy.

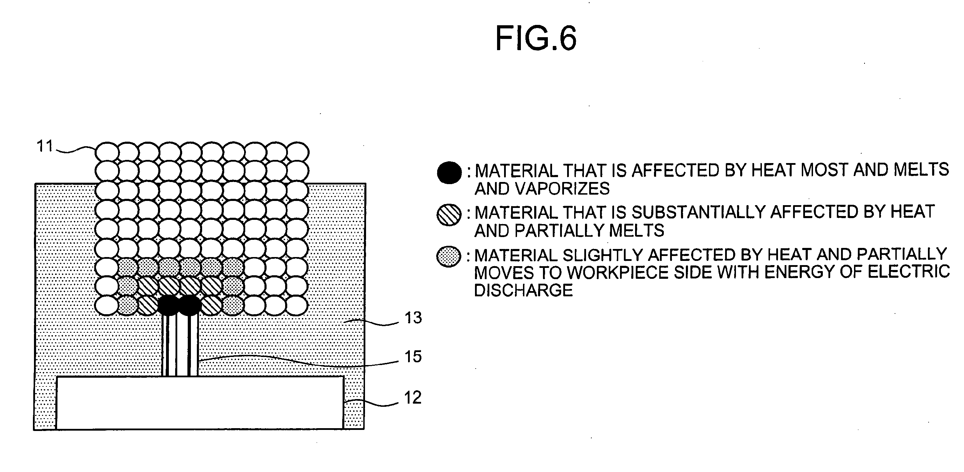

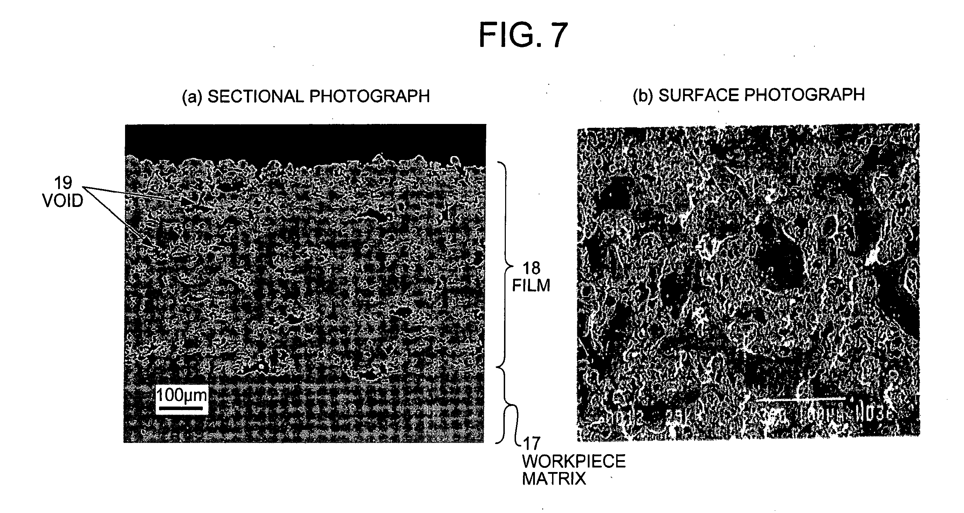

Fig. 3 is a diagram for explaining a method of forming a discharge electrode containing a material less easily carbonized. Fig. 4 is a schematic of an apparatus implementing the discharge surface-treatment method according to the present invention. Fig. 5 is a waveform chart of a voltage pulse and a current pulse for explaining a principle relation between a pulse voltage applied to the inter-electrode gap and a discharge pulse current flowing in the discharge surface-treatment apparatus shown in Fig. 4. Fig. 6 is a diagram for explaining a mechanism of film formation. Fig. 7 is a microphotograph (a sectional photograph and a surface photograph) of a state of a film formed on a workpiece.

A process of forming a discharge electrode obtained by compression-molding powder of a Co alloy is as shown in Fig. 3. In Fig. 3, a mixture obtained by mixing Co alloy powder 1 with a particle diameter of about 1 micrometer to 2 micrometers and a wax (2% to 10% in weight) for improving moldability is filled in a space surrounded by an upper punch 2, a lower punch 3, and a die 4 of a mold. A discharge electrode is formed by applying a pressure of about 150 Mpa to the mixture and compression-molding the mixture.

The discharge electrode formed in this way is heated at temperature in a range of 600°C to 800°C to increase strength of the electrode itself and remove the mixed wax. Note that the appropriate heating temperature can be different depending on factors a material of powder, a particle diameter of the powder, a pressure at the time of compression, and the like.

A compounding ratio of an alloy of Co alloy powder 1 is 25 weight % of Cr, 10 weight % of Ni, 7 weight % of tungsten (W), and the remaining weight % of Co. This ratio indicates a combination of metals used as a material for abrasion resistance under a high-temperature environment. The electrode in which the metals are compounded at such a ratio shows hardness inherent in the material. The electrode also shows an effect of abrasion resistance because Cr₂O₃ (chromium oxide), which is formed when Cr is oxidized under the high-temperature environment, shows lubricity.

Other examples of a similar material for the discharge electrode include stellite alloys with compounding ratios of 28 weight % of Mo, 17 weight % of Cr, 3 weigh % of silicon (Si), the remaining weight % of Co and 20 weight % of Cr, 10 weight % of Ni, 15 weight % of W, and the remaining weight % of Co. The stellite alloys are excellent in corrosion resistance and high-temperature hardness. Thus, the stellite alloys are materials usually coated on a component requiring these characteristics by welding or the like and are suitable for coating at the time when corrosion resistance and high-temperature hardness are required.

In an application in which such functions are not required and a thick film is simply formed such as repair of a component, for example, it is possible to form the thick film even if an electrode made of only powder of Co, Ni, or Fe is used.

In Fig. 4, a discharge electrode 11 is an electrode formed as described above and has a square shape (15mm×15mm). This discharge electrode 11 and a workpiece 12 are arranged in a machining fluid 13 to be opposed to each other. A pulse voltage shown in Fig. 5(a) is applied to the discharge electrode 11 and the workpiece 12 from a power supply for discharge surface treatment 14. As described above, as polarities of the applied voltage are minus at the discharge electrode 11 and plus at the workpiece 12.

In the inter-electrode gap between the discharge electrode 11 and the workpiece 12, as shown in Figs. 5(a) and 5(b), a high no-load voltage ui is applied before electric discharge begins. When electric discharge occurs after elapse of a discharge delay time td, the voltage drops to a low discharge voltage ue. A predetermined time (a discharge pulse width) te during which a discharge current flowing in a direction of an arrow in Fig. 4 is continued elapses, the voltage drops to zero. Thereafter, a pulse voltage of a width td+te is applied every time quiescent time to elapses. Consequently, pulse-like electric discharge repeatedly occurs in the inter-electrode gap between the discharge electrode 11 and the workpiece 12. A film is formed on the surface of the workpiece 12 as described below.

In Fig. 5(b), a rectangular wave is shown as a current waveform. Actually, rising of an electric current is moderate because of inductance of a path on which the electric current flows. However, a current pulse has rising of about 10 µA/µs.

In other words, in Fig. 4, when pulse-like electric discharge occurs in the inter-electrode gap between the discharge electrode 11 and the workpiece 12, an arc column 15 of the electric discharge occurs because of thermal energy of the electric discharge, an electrode material is discharged into the machining fluid 13 and reaches the surface of the workpiece 12. In this case, a part of the electrode material is melted by energy of the electric discharge and coagulated on the surface of the workpiece 12 to form a film.

Therefore, to form a dense and thick film according to the discharge surface treatment, it is necessary that an amount of supply of the electrode material to the inter-electrode gap by the pulse-like electric discharge and an amount of supply of the electrode material to the workpiece surface after that are appropriate and the electrode material supplied is melted by the pulse-like electric discharge to be firmly combined with the workpiece surface. The pulse conditions of electric discharge explained with reference to Fig. 1 [peak current value ie=10A, discharge duration (discharge pulse width) te=64/µs, quiescent time to=128µs] is an example of values satisfying this requirement.

The mechanism of film formation is explained with reference to Fig. 6. In Fig. 6, when electric discharge occurs, both the discharge electrode 11 and the workpiece 12 are heated by thermal energy of the electric discharge. However, since the discharge electrode 11 is made of powder, heat conduction is poor. Therefore, heat concentrates near a formation area of the arc column 15 of the electric discharge and a part of the discharge electrode 11 even vaporizes. A powder substance of the electrode melted by the heat is discharged into the machining fluid 13 because of an explosive force by the vaporization. On the other hand, on the workpiece 12 side, although the portion of the formation area of the ark column 15 of the electric discharge is melted by the thermal energy of the electric discharge, most of the discharge thermal energy travels through the workpiece 12 itself and spreads. Thus, the discharge of the workpiece 12 side material into the machining fluid 13 is little. Therefore, it can be assumed that the electrode material side moves to the workpiece material side to form a film according to the explosive force by vaporization of the electrode material and a force of the melted electrode material pulled by an electromagnetic force (which is the same as a force acting when a material of a welding rod moves to a workpiece side in welding).

The state of a film formed on a workpiece under the pulse conditions of electric discharge explained with reference to Fig. 1 is examined with reference to Fig. 7. Fig. 7(a) is a sectional photograph and Fig. 7(b) is a surface photograph. As shown in Fig. 7(a), when the current pulse of the rectangular shape shown in Fig. 5(b) is used, it is observed that a film 18 that is thick and dense to some extent is firmly formed on a workpiece matrix 17 but a large number of voids (black portions) 19 are present in the film 18.

A large number of voids 19 are formed in the film 18 in this way. This is considered to be because an electrode material not melted sufficiently is supplied when the electrode material is supplied from the discharge electrode to the workpiece side. Looking at the surface photograph of Fig. 7(b), it is also observed that fine powder not melted is present. This powder is not always powder itself forming the discharge electrode. Powder subjected to thermal energy of electric discharge enough to melt and fuse several kinds of powder is also observed. It is considered that, when electric discharge occurs on the powder not fused, a part of the powder is melted and the melted material is supplied from the electrode side to facilitate film formation while forming the voids 19.

A phenomenon in which film formation progresses while the voids 19 are formed can be explained using the mechanism of film formation shown in Fig. 6. A sufficiently melted dense film can be formed if only a material of a portion affected by heat most shown in Fig. 6 moves to the workpiece side to form a film. However, the film 18 having the voids 19 is formed when a material of a portion substantially affected by heat and a material of a portion slightly affected by heat also move to the workpiece side.

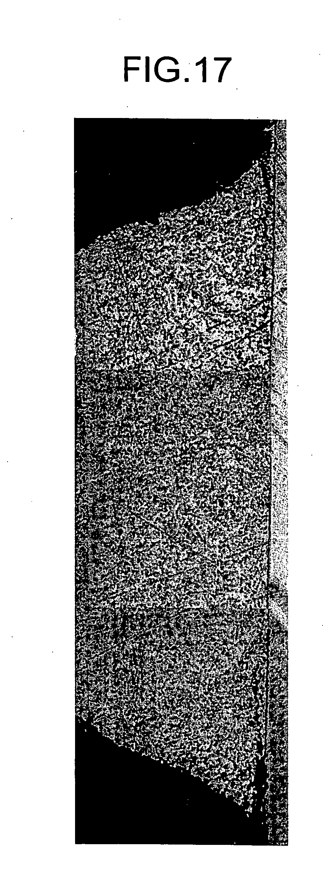

Thus, based on a result of experiments at varying discharge pulse conditions, the inventors assumed that, concerning the formation of the film 18 having the voids 19 shown in Fig. 17, a ratio of a material not sufficiently melted moving to the workpiece side when the electrode material moves to the workpiece side because of electric discharge is substantially affected by a pulse width of the electric discharge. The inventors consider that, when the pulse width increases, the material not melted moves from the electrode side to the workpiece side at a high rate and, when the pulse width decreases, the ratio of movement of the material not melted decreases and a ratio of the material completely melted being supplied to the workpiece side increases.

On the electrode side, when the pulse width increases, since time of heat input due to the electric discharge increases, a range of an influence of heat from a portion completely melted directly below an arc extends to a material portion not completely melted. As a result, in the material portion not completely melted, energy sufficient for weakening combination of the powder of the discharge electrode is given. Thus, the electrode material not melted moving to the workpiece side increases. Conversely, when the pulse width decreases, on the electrode side, the influence of heat does not expand and the electrode material completely melted moves to the workpiece side. Thus, it is possible to form a dense film.

However, when the pulse width decreases, problems described below occur. When the pulse width decreases, since energy of a discharge pulse current decreases, if the electrode material contains powder with a large particle diameter, the material may not be melted. Since the energy of the discharge pulse current is small, it is difficult to move a sufficient amount of electrode material to the workpiece side. Thus, speed of formation of a film may be extremely low.

It has been clarified by the experiment of the inventors that, to solve such problems, it is effective to increase, although a pulse width is short, the energy of the discharge pulse current, or increase a peak current value. It has also been clarified by the experiment of the inventors that, to form a film dense, or lower a percentage of voids, it is necessary to decide conditions of a discharge pulse current actually used according to whether a discharge electrode to which the conditions are applied is easily melted. A relation between conditions of a discharge pulse current and a discharge electrode to which the conditions are applied is explained as second and third embodiments. According to the embodiments, it is possible to improve machining speed to form a dense film.

### Second Embodiment

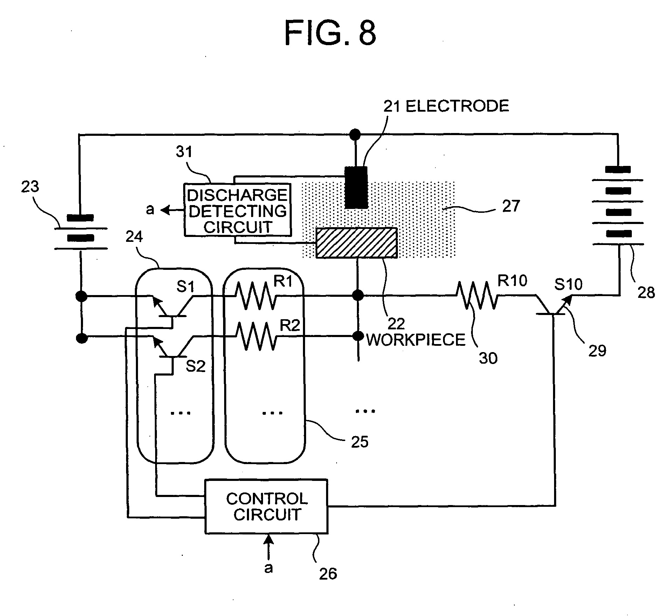

Fig. 8 is a block diagram of an apparatus implementing the discharge surface-treatment method according to a second embodiment of the present invention. In Fig. 8, an electrode for discharge surface treatment 21 is an electrode obtained by compression-molding powder (a particle diameter of which is about 1 micrometer to 2 micrometers) of a Co alloy [25 weight % of Cr, 10 weight % of Ni, 7 weight % of W, and the remaining weight % of Co], which is a material relatively easily melted. A workpiece 22 serving as a material to be treated (a matrix) is made of a nickel alloy. The discharge electrode 21 and the workpiece 22 are arranged to be opposed to each other at a predetermined interval in a machining fluid 27 by a not-shown driving device.

A negative pole (minus) of a first power supply 23 and a negative pole (minus) of a second power supply 28 are connected to the electrode 21. A positive pole (plus) of the first power supply 23 is connected to the workpiece 22 via series circuits of a switching element group 24 and a resistor group 25. A positive pole (plus) of the second power supply 28 is connected to the workpiece 22 via a series circuit of a switching element 29 and a resistor 30. In other words, a plurality of series circuits of switching elements and resistors are provided in parallel between the workpiece 22 and the positive pole (plus) of the first power supply 23. A discharge detecting circuit 31 is connected between the discharge electrode 21 and the workpiece 22. A discharge detection signal "a" of the discharge detecting circuit 31 is inputted to a control circuit 26. The control circuit 26 ON/OFF-controls the respective switching elements of the switching element group 24 and the switching element 29 and controls application of a voltage from the first power supply 23 and the second power supply 28 to the inter-electrode gap.

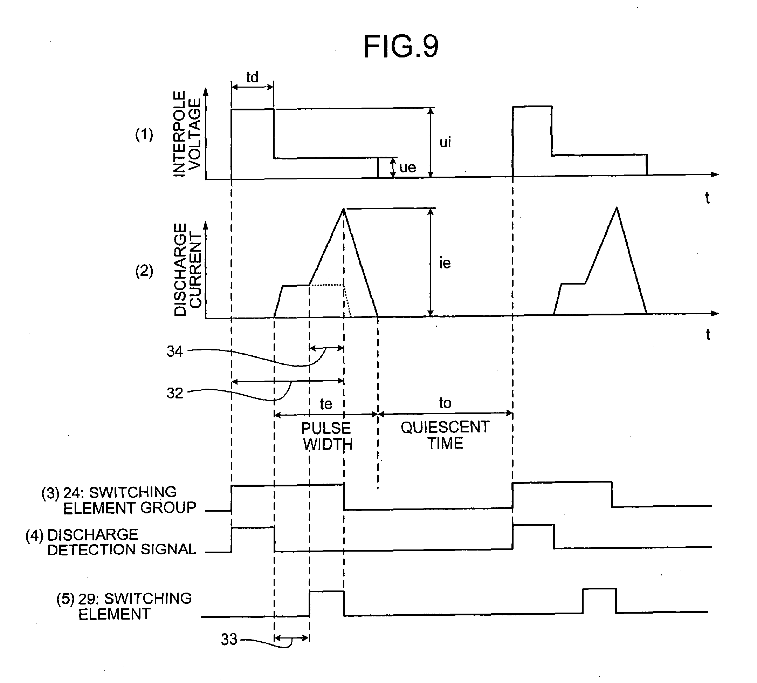

Operations of the discharge surface-treatment apparatus constituted as described above are explained with reference to Fig. 9. Fig. 9 is a waveform chart for explaining operations of the discharge surface-treatment apparatus shown in Fig. 8. Fig. 9(1) is a waveform of a pulse voltage applied to the inter-electrode gap between the discharge electrode 21 and the workpiece 22. Fig. 9(2) is a waveform of a discharge pulse current flowing to the inter-electrode gap. Fig. 9(3) is a waveform of an ON/OFF control signal that the control circuit 26 gives to all or a part of the switching elements of the switching element group 24. The waveform indicates that the corresponding switching elements perform an ON operation during a period 32 in which the waveform is at a high level (H level). Fig. 9(4) is a waveform of the discharge detection signal "a" that the discharge detecting circuit 31 gives to the control circuit 26. Fig. 9(5) is a waveform of an ON/OFF control signal that the control circuit 26 gives to the switching element 29. The waveform indicates that the switching element 29 performs an ON operation during a period 34 in which the waveform is at an H level.

At the time of start of the discharge surface treatment, when the control circuit 26 drives the corresponding switching elements of the switching element group 24 to turn ON (Fig. 9(3)), a voltage (a no-load voltage ui) of a predetermined value is applied to the inter-electrode gap from the first power supply 23. The inter-electrode gap voltage is maintained at the no-load voltage ui until a discharge delay time td elapses. Electric discharge occurs after the elapse of the discharge delay time td and the inter-electrode gap voltage drops from the no-load voltage ui to the predetermined discharge voltage ue.

The discharge detecting circuit 31 raises a level of the discharge detection signal "a" outputted to the control circuit 26 to the H level in response to the start of the discharge surface treatment. The discharge detecting circuit 31 monitors the inter-electrode gap voltage and, when it is detected that the inter-electrode gap voltage drops to the predetermined discharge voltage ue, recognizes that electric discharge occurs in the inter-electrode gap and sets the level of the discharge detection signal "a" outputted to the control circuit 26 to a low level (L level) (Fig. 9(4)).

The control circuit 26 drives, in response to the discharge detection signal "a" set to the L level, the switching element 29 to turn ON in the predetermined time 34 after the elapse of the predetermined time 33 and applies a voltage of a predetermined value to the inter-electrode gap from the second power supply 28. When the predetermined time 34 elapses, the control circuit 26 drives to turn OFF the corresponding switching elements of the switching element group 24 and the switching element 29 (Figs. 9(5) and 9(3)). In other words, during the predetermined time 34, a voltage outputted by the first power supply 23 and a voltage outputted by the second power supply 28 are superimposed and applied to the inter-electrode gap.

As a result, as shown in Fig. 9(2), a rectangular discharge current of a low value flows to the inter-electrode gap during the predetermined time 33 immediately after the electric discharge begins. However, a discharge current rising substantially linearly at fast rising having a certain inclination (A/µs) flows simultaneously with the elapse of the predetermined time 33. The rising characteristic (A/µs) at this point is decided from the voltage applied by the second power supply 28 and an inductance component present in the current path. When the predetermined time 34 elapses, since power supply from both the power supplies is stopped, with the discharge current at the time of the elapse of the predetermined time 34 as a peak current value ie, thereafter, the discharge current discharges through an inductance component present in a not-shown overvoltage-generation preventing circuit and decreases substantially linearly with a certain inclination to disappear. A period from the start of flowing of the discharge current until the disappearance of the discharge current is the pulse width te. A period from the disappearance of the discharge current until the next voltage application is the quiescent time to.

As shown in Fig. 9(2), the discharge pulse current according to this second embodiment is generated such that the discharge pulse current flows in a rectangular shape of a low value at an initial stage of electric discharge but most of the current flows in a triangular shape having a large peak current value according to input of the second power supply 28. A period in which the second power supply 28 applies a voltage, that is, the period 34 in which the switching element 29 is driven to turn ON is decided from an inductance component present in a current path between the second power supply and the inter-electrode gap and the peak current value ie required.

To reduce the pulse width te and generate a pulse current with a high peak current value ie, an inductance component present in a current path between the first and the second power supplies and the inter-electrode gap is preferably as small as possible. However, realistically, the current path has an inductance component of a certain value. Thus, it is a good method for obtaining a high peak current value to set a resistance of the current path between the second power supply 28 and the inter-electrode gap as small as possible (e.g., not to provide the resistor 30) and cause the switching element 29 to perform an ON operation during the predetermined time 34 to have a rectangular waveform shown in Fig. 9(2). It goes without saying that, if it is possible to set the inductance component of the current path between the first and the second power supplies and the inter-electrode gap ideally small, it is possible to limit a peak current value with the resistor 30 and obtain a rectangular discharge pulse current having a high peak current value.

In this way, the first power supply 23 has the purpose of causing electric discharge in the inter-electrode gap between the discharge electrode 21 and the workpiece 22 and the second power supply 28 has the purpose of increasing speed of rising of a discharge pulse current flowing to the inter-electrode gap. Thus, it is desirable to set a power supply voltage at the second power supply 28 higher.

Specific numerical value examples (conditions of a discharge pulse current) are described. As described above, to form a film dense, a discharge pulse current for sufficiently melting only a necessary portion of an electrode material in a short time is required. To obtain such a discharge pulse current, a waveform of a high-peak short pulse with high rising speed of a discharge pulse current is required. According to the experiment of the inventors, it has been found that improvement of density of a film is facilitated when a pulse width is equal to or smaller than 1 microsecond and a peak current value is equal to or higher than about 10 amperes to 30 amperes.

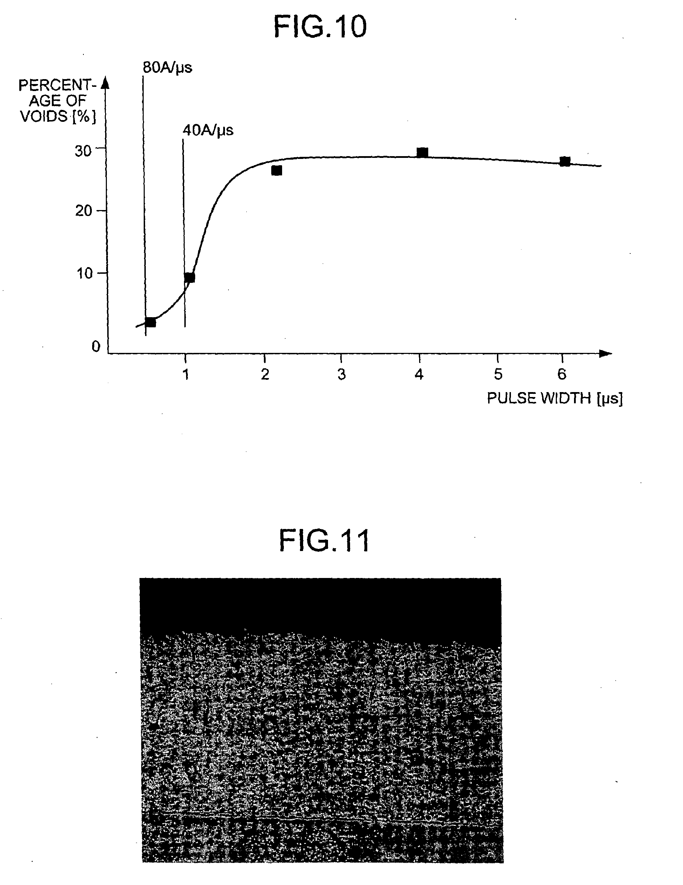

Thus, a resistance of the resistor 30 is set to a value smaller than that of the resistor group 25 or the resistor 30 is not connected. The period 34 in which a voltage is superimposed and applied from the second power supply 28 is set to be equal to or shorter than 1 microsecond. In this short time equal to or shorter than 1 microsecond, a discharge pulse current of a value as high as 10 amperes to 30 amperes is fed. Rising speed of the discharge pulse current is decided based on Fig. 10.

Fig. 10 is a characteristic diagram for explaining a relation between a pulse width of a discharge pulse current and a percentage of voids (denseness). An abscissa indicates a pulse width (µs) and an ordinate indicates a percentage of voids (%). In Fig. 10, a relation between a pulse width and denseness of a film at the time when a peak current value is set to about 20 amperes is shown. The percentage of voids (%) indicated by the ordinate of Fig. 10 represents an area occupied by a black portion appearing in a microscope sectional photograph. The microscope sectional photograph is observed to represent denseness in the percentage of voids (%).

It is seen from Fig. 10 that, when a pulse width exceeds 1 microsecond, a percentage of voids of a film is about 20% to 30% but when, the pulse with is about 1 microsecond, the percentage of voids falls to about 10% and, when the pulse width is about 0.5 microsecond, the percentage of voids falls to about several percent. Thus, in the case of a triangular pulse current, when a pulse width is 1 microsecond, if rising and falling of an electric current are the same time, rising speed only has to be as high as 40 A/µs. It is seen that, to form a film denser, 80 A/µs twice as high as the rising speed is desirable.

Fig. 11 is a microscope sectional photograph of a film formed by a discharge pulse current with rising speed of 80 A/µs and a pulse width of 1 microsecond. A pulse width of a pulse voltage from the second power supply, that is, the period 34 in which the switching element 29 is caused to perform an ON operation is 0.5 microsecond. As it is seen from Fig. 11, a dense film with a small number of voids is formed.

In this way, according to the second embodiment, when occurrence of electric discharge based on voltage application by the first power supply is detected, a voltage (preferably a voltage higher than that of the first power supply) is applied from the second power supply for a predetermined period (e.g., a period equal to or shorter than 1 microsecond) and a current generated by the second power supply (a second current) is added to a current generated by the first power supply (a first current) to feed a discharge pulse current with high rising speed and a high-peak short pulse to the inter-electrode gap. Thus, it is possible to perform discharge surface treatment for melting only a necessary portion of an electrode material in a short time, moving the electrode material melted to a workpiece side such that the workpiece contains the electrode material at a high ratio, and forming a film of melted metal on a workpiece surface. Therefore, there is an effect that it is possible to decrease a percentage of voids and form a dense film.

In Fig. 8, a system using two power supplies is shown. However, if the inductance component present in the current path between the first power supply and the inter-electrode gap can be reduced and the voltage value of the power supply is increased to be equal to or higher than that of the second power supply, the second power supply is not always necessary. When only the first power supply is provided, it is possible to generate a triangular current waveform having a high peak current value shown in Fig. 9(2) by constituting a resistor group with resistors that have different resistances and controlling a part of a switching element group.

### Third Embodiment

In a third embodiment of the present invention, conditions of a discharge pulse current applied when a material less easily melted is contained in a discharge electrode or, even when the discharge electrode contains a material easily melted, a particle diameter of powder forming the discharge electrode is large and the discharge electrode is less easily melted are explained.

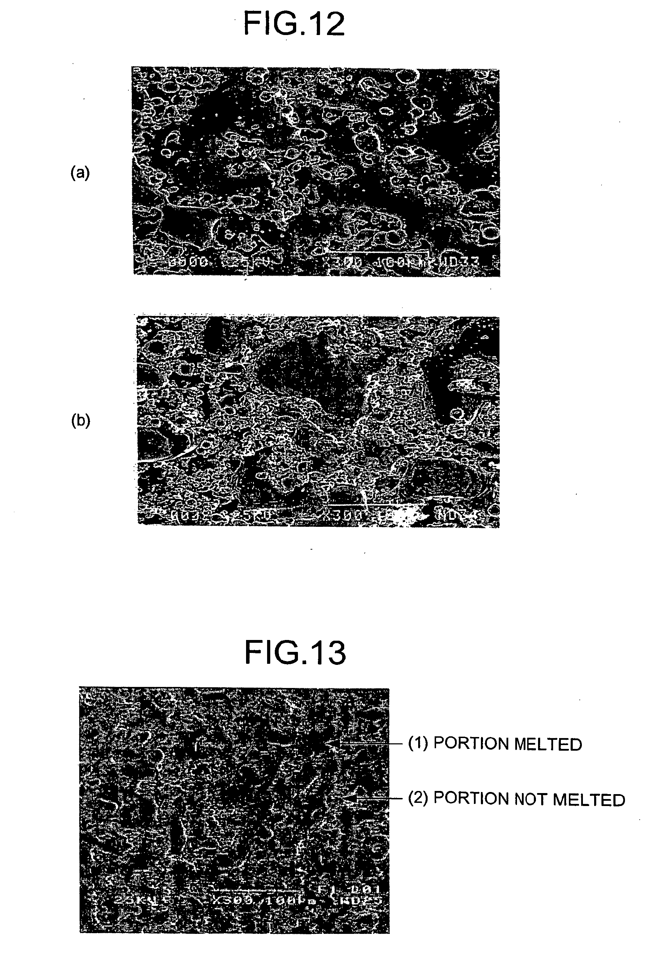

Fig. 12 is a microphotograph of states of films formed on workpieces under the same discharge conditions when a material easily melted is contained in a discharge electrode and a material less easily melted is contained in the discharge electrode. A film formed by the discharge electrode obtained by compression-molding powder of a Co alloy [25 weight % of Cr, 10 weight % of Ni, a 7 weight % of W, and the remaining weight % of Co] used in the second embodiment is shown in Fig. 12(a). In Fig. 12(b), a film formed by the discharge electrode obtained by compression-molding powder of a stellite alloy [28 weight % of Mo, 17 weight % of Cr, 3 weight % of silicon (Si), and the remaining weight % of Co] described above is shown. Discharge conditions are identical in both the cases: a peak current value is 10 amperes and discharge duration (a discharge pulse width) is 8 microseconds.

Since there are many portions of the material melted in Fig. 12(a), it can be said that this Co alloy [25 weight % of Cr, 10 weight % of Ni, 7 weight % of W, and the remaining weight % of Co] is a material easily melted. On the other hand, since there are many portions of the material not sufficiently melted and remaining as particles in Fig. 12(b), it can be said that this stellite alloy [28 weight % of Mo, 17 weight % of Cr, 3 weight % of silicon (Si), and the remaining weight % of Co] is a material less easily melted.

Fig. 13 is a microphotograph of a state of a film formed using a discharge electrode that includes a material easily melted but is less easily melted because a particle diameter of powder forming the discharge electrode is large. In Fig. 13, the discharge electrode obtained by compression-molding powder of a Co alloy [25 weight % of Cr, 10 weight % of Ni, 7 weight % of W, and the remaining weight % of Co] used in the second embodiment is used. However, a particle diameter of powder forming the discharge electrode is different from that in the second embodiment. Powder obtained by mixing powder having a particle diameter of about 6 millimeters in powder having a particle diameter of about 1 millimeter to 2 millimeters is used.

The powder with a large particle size is mixed because it has been clarified by the experiment of the inventors that moldability is better in press-molding a discharge electrode. It has been clarified that, only with powder having a small particle diameter, when a pressure is released after press, a green compact serving as a compact expands but, by mixing powder having a large particle diameter, a flow of powder is improved and a pressure of press is uniformly transmitted to an electrode (a compact) to substantially eliminate expansion of the electrode after releasing the pressure.

The film shown in Fig. 13 is considered. Although a seemingly dense film is formed, when the film is observed in detailed by an electron microscope (SEM), it is seen that a large number of electrode material portions not melted (2) are included in the film other than portions melted (1) by mixing the powder with a large particle size. The same phenomenon is observed when a material is less easily melted even when a particle diameter of powder forming the discharge electrode is small.

In this way, when the material less easily melted is contained in the discharge electrode or, even when the discharge electrode contains the material easily melted, a particle diameter of powder forming the electrode is large and the discharge electrode is less easily melted, a portion near an arc column of the electrode moves is melted to move to the workpiece side if the discharge pulse current of the high-peak short pulse used in the second embodiment is applied. However, since a portion not completely melted is mixed and moves, a film is formed with the portion not melted remaining in the film. In a state in which the electrode material not melted remains in the film, there is a problem because a dense film having sufficient strength cannot be formed in some cases.

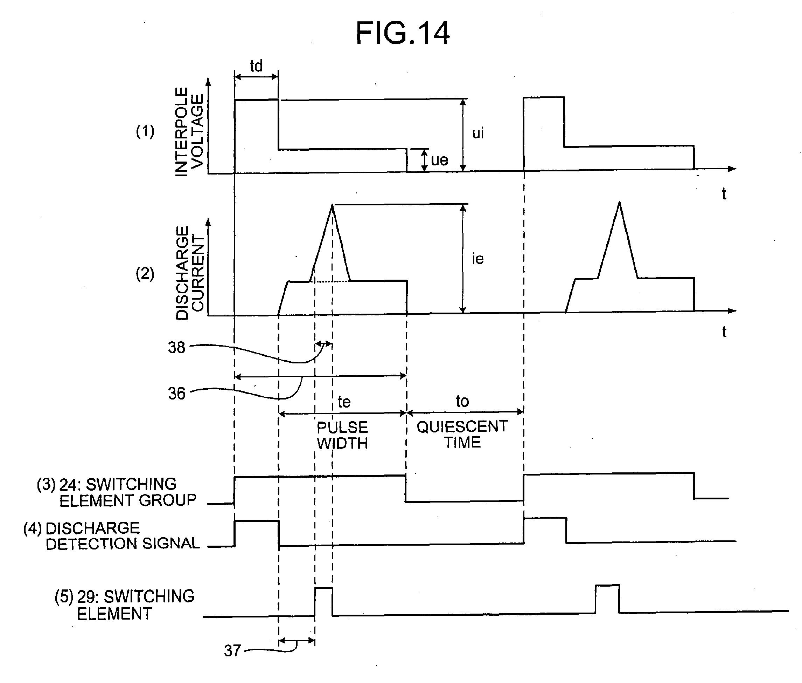

Thus, in the third embodiment, the discharge pulse current of the high-peak short pulse used in the second embodiment is slightly changed to cope with the problem. The third embodiment is explained with reference to Figs. 14 to 16.

Fig. 14 is a waveform chart for explaining discharge conditions applied in the discharge surface-treatment method according to the third embodiment of the present invention. Items shown in Fig. 14 are the same as those in Fig. 9. The discharge conditions are explained according to Fig. 14 with reference to Fig. 8.

In Fig. 14, at the time of start of the discharge surface treatment, when the control circuit 26 drives corresponding switching elements of the switching element group 24 to turn ON (Fig. 14(3)), a voltage (the no-load voltage ui) of a predetermined value is applied to the inter-electrode gap from the first power supply 23. The inter-electrode gap voltage is maintained at the no-load voltage ui until the discharge delay time td elapses. Electric discharge occurs after the elapse of the discharge delay time td and the inter-electrode gap voltage drops to the predetermined discharge voltage ue from the no-load voltage ui.

The discharge detecting circuit 31 raises a level of the discharge detection signal "a" outputted to the control circuit 26 to the H level in response to the start of the discharge surface treatment. The discharge detecting circuit 31 monitors the inter-electrode gap voltage and, when it is detected that the inter-electrode gap voltage drops to the predetermined discharge voltage ue, recognizes that electric discharge occurs in the inter-electrode gap and sets the level of the discharge detection signal "a" outputted to the control circuit 26 to the L level (Fig. 14(4)).

The control circuit 26 drives, in response to the discharge detection signal "a" set to the L level, the switching element 29 to turn ON in a predetermined time 38 after the elapse of a predetermined time 37 and applies a voltage of a predetermined value to the inter-electrode gap from the second power supply 28. When the predetermined time 38 elapses, the control circuit 26 drives to turn OFF only the switching element 29 (Figs. 14(5)). The corresponding switching elements of the switching element group 24 continue the ON operation even after the elapse of the predetermined time 38 and perform an OFF operation after the elapse of a period 36 (Fig. 14(3)). In other words, during the predetermined time 38, a voltage outputted by the first power supply 23 and a voltage outputted by the second power supply 28 are superimposed and applied to the inter-electrode gap.

As a result, as shown in Fig. 14(2), a rectangular discharge current of a low value flows to the inter-electrode gap during the predetermined time 37 immediately after the electric discharge begins. However, a discharge current rising substantially linearly at fast rising having a certain inclination (A/µs) flows simultaneously with the elapse of the predetermined time 37. The rising characteristic (A/µs) at this point is decided from the voltage applied by the second power supply 28 and an inductance component present in the current path. When the predetermined time 38 elapses, power supply from both the second power supply 28 is stopped. Thus, with the discharge current at the time of the elapse of the predetermined time 38 as the peak current value ie, thereafter, the discharge current discharges through an inductance component present in a not-shown overvoltage-generation preventing circuit and decreases substantially linearly with a certain inclination to be switched to the rectangular discharge current of a low value maintained by the first power supply 22. The rectangular discharge current of a low value in this latter half portion disappears after the elapse of the period 36. A period from the start of flowing of the discharge current until the disappearance of the discharge current is the pulse width te. A period from the disappearance of the discharge current until the next voltage application is the quiescent time to.

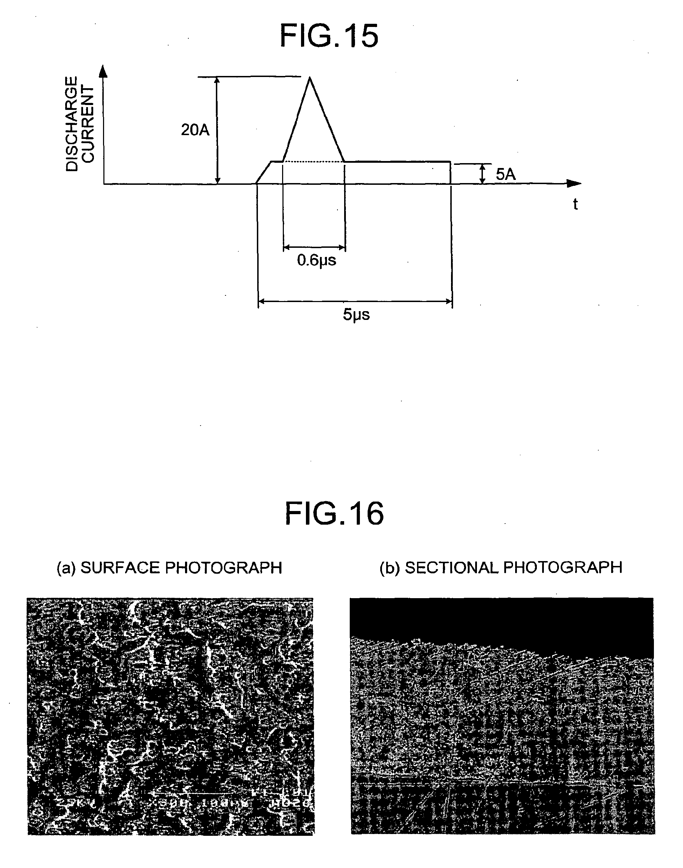

As shown in Fig. 14(2), the discharge pulse current according to this third embodiment is generated to flow in a rectangular shape of a low value at an initial stage of electric discharge, flow in a triangular shape having a large current value in a short period after that, and flow in a rectangular shape of a low value in a long period after that. As a specific example of a numerical value, the discharge current of a triangular shape having a large peak current value is, for example, about 10 amperes to 20 amperes as in the second embodiment. A current value of the rectangular discharge current of a low value continuing for a long period after that is, for example, about 1 ampere to 5 amperes (an actual example of application is shown in Fig. 15).

This makes it possible to collapse, in a short period in which a discharge current of a high peak and a short pulse width flows, the electrode with thermal energy of the electric discharge and move the electrode material to the workpiece side and, in a period in which a long-pulse-width discharge current of a low value flows following the short period, continue to heat the electrode material moved on the workpiece side and facilitate melting of the electrode material. In this case, in the period in which the long-pulse-width discharge current of a low value flows in the latter half portion, the action of moving the electrode material to the workpiece side is small. For example, even if a pulse width, which is the period in which the current flows, is changed, an amount of electrode consumption per pulse does not substantially change.

Consequently, when the material less easily melted is contained in the discharge electrode or, even when the discharge electrode contains the material easily melted, a particle diameter of powder forming the electrode is larger and the discharge electrode is less easily melted, it is possible to prevent the electrode material not melted from remaining the film (see Fig. 16). This is explained with reference to Figs. 15 and 16.

Fig. 15 is a waveform chart of respective values of a discharge pulse current actually used. In Fig. 15, a pulse width of the discharge pulse current is 5 microseconds and a peak current value is 20 amperes. A period in which a triangular discharge current flows in the pulse width of 5 microseconds is 0.6 microsecond. A value of a rectangular discharge current of a low value following the triangular discharge current is 5 amperes. A rising characteristic of the triangular discharge current is equal to or higher than 40 A/µs as in the second embodiment.

Fig. 16 is a microphotograph of a film obtained by applying the discharge pulse current shown in Fig. 15. Fig. 16(a) is a surface photograph and Fig. 16(b) is a sectional photograph. As it is seen from comparison with Fig. 11, it can be confirmed that there are quite few black portions (voids) in the sectional photograph of the film and the film is much denser.

In Fig. 14(2), the discharge current of a low value by the first power supply 23 takes a fixed value during the discharge period. However, for example, the discharge current may be set high immediately after occurrence of electric discharge and, then, changed to a low value. In this case, there are the following advantages. A voltage at the inter-electrode gap before the electric discharge occurs is a voltage at the first voltage source 23. In this case, when impedance of a circuit is large, or a resistor having a large value in the resistor group 25 is connected to the first power supply 23 via a corresponding switching element in the switching element group 24 and present in the current path, the voltage tends to be affected by the inter-electrode gap. When the inter-electrode gap is soiled by shavings or the like, the voltage tends to drop. Thus, until electric discharge occurs, a resistor having a small value in the resistor group 25 is connected to the first power supply 23 via a corresponding switching element in the switching element group 24 and, after electric discharge occurs, a resistor having a large value in the resistor group 25 changes the connection with the first power supply 23 to a corresponding switching element in the switching element group 24. This makes it easy to stably cause electric discharge.

A relation between waveform requirements of the discharge pulse current shown in Fig. 14(2) generated for forming a dense relatively thick film and an electrode is explained. First, a pulse width of a low-peak long pulse portion following a triangular high-peak short pulse portion has an optimum value. When the pulse width is too short, a material not melted increases to form voids in the film. When the pulse width is too long, since thermal energy of electric discharge accumulates in the electrode, even a current value of a low peak moves the electrode material to the workpiece side and forms voids in the same manner.

A pulse width of the triangular high-peak low pulse portion also has an optimum value. When the pulse value is too small, since the electrode cannot be melted and collapsed, it is difficult to form a film. Conversely, when the pulse value is too large, since even not-melted portions of the electrode are collapsed and moved to the workpiece side, a weak film having a large number of voids is obtained.

These optimum values substantially depend on a structure of an electrode. When the electrode has weak connection among powder particles, it is possible to form a film even if a peak current value of the high-peak short pulse portion is low. However, when the electrode has strong connection among powder particles, it is necessary to increase a peak current value of the high-peak short pulse portion to cut the connection among powder particles.

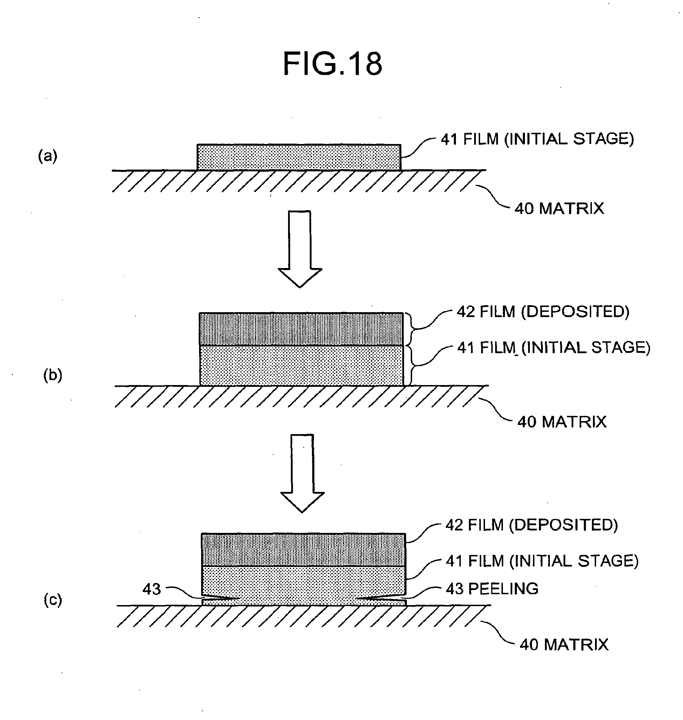

Peeling of a film is briefly explained with reference to Figs. 17 and 18. Fig. 17 is a microphotograph of an example of peeling that occurs in a film. Fig. 18 is a diagram for explaining a process of occurrence of peeling in a film.

In Fig. 17, an example of occurrence of peeling is shown. Peeling of a film is a phenomenon that occurs when a film formed by the discharge surface treatment is in a porous state with a large number of voids. A cause of the peeling is explained with reference to Fig. 18.

Since a film thickness of a film increases as a treatment time elapses, as shown in Fig. 18(a), a film 41 in a thin state adheres to a matrix 40 at an initial stage. However, as shown in Fig. 18(b), when the film thickness increases, an electric current of electric discharge at the time of formation of an upper portion 42 of the film 41 heats a portion with a large number of voids, that is, a portion with high electric resistance to make the film 41 dense when the electric current flows through a lower portion of the film 41 formed at the initial stage. When the film is formed dense, the film contracts. Thus, as shown in Fig. 18(c), distortion occurs in the film 41 and peeling (crack of the film) 43 occurs near an interface between the film 41 and the matrix 40.

Thus, a peeling phenomenon of a film due to the discharge surface treatment occurs because the film is in a porous state of voids. Thus, the peeling phenomenon does not occur if a dense film can be formed from the beginning. In other words, according to the discharge surface-treatment method according to this embodiment explained above, since it is possible to form a film dense, it is possible to prevent peeling of the film.

According to this third embodiment, the discharge pulse current is formed by the discharge current of the high-peak short pulse and the discharge current of the low-peak long pulse following the discharge current. Thus, it is possible to collapse a compact electrode with high thermal energy in a short time to move the compact electrode to the workpiece side and continue to heat the compact electrode with low thermal energy in a long time to facilitate melting on the workpiece side. Even if an electrode material from which it is difficult to form a film dense is used, it is possible to lower a percentage of voids of a film and form a dense film.

In short, according to the second and the third embodiments, it is possible to control a quantity of an electrode material supplied from the electrode to the inter-electrode gap according to a state of the electrode. This makes it possible to efficiently perform treatment for forming a dense and relatively thick film.

In this third embodiment, as in the first and the second embodiments, it is possible to reduce an inductance component present in the circuit. If a voltage value of the first power supply is increased to be equal to or higher than that of the second power supply, the second power supply is not always necessary. It is possible to generate the discharge pulse current formed by the discharge current of the high-peak low pulse and the discharge current of the low-peak long pulse following the discharge current only with the first power supply.

This can be realized by causing a switching element, to which a resistor of a low value in the resistor group 25 is connected, in the switching element group 24 to perform an ON operation for a short period in the high-peak short pulse portion and causing a switching element, to which a resistor of a high value in the resistor group 25 is connected, in the switching element group 24 to perform an ON operation in the low-peak and long-pulse portion after the high-peak short pulse portion.

In the above explanation, the discharge surface treatment is performed in the machining fluid. However, the present invention is not limited to this. For example, a gas may be used instead of the machining fluid. For example, when it is desired to form a film of a material having high reactivity such as Ti, it is possible to stably perform treatment if the material is treated in an atmosphere of an inert gas such as argon (Ar). When the treatment is performed in nitrogen, it is possible to form a nitride film. Naturally, it is also possible to perform the treatment in the atmosphere. However, since the material is oxidized, it is necessary to pay attention when the oxidization causes inconvenience.

In this way, it is possible to treat the material in the gas. However, since an inter-electrode gap distance between an electrode and a workpiece is reduced compared with the treatment in the machining fluid, it is desirable to increase a voltage at a power supply to prevent short-circuit. A power supply that can apply a voltage equal to or higher than 300 volts, more desirably, equal to or higher than 500 volts in a no-load state before electric discharge is desirable. When oil is used as the machining fluid, if a material easily carbonized is used as an electrode, a part of the film material is formed as carbide. If the treatment is performed in an inert gas, it is possible to form a film from the material easily carbonized without forming carbide.

### INDUSTRIAL APPLICABILITY

As described above, the discharge surface-treatment method and the discharge surface-treatment apparatus according to the present invention are useful for treatment for forming a dense and relatively thick film. In particular, the discharge surface-treatment method and the discharge surface-treatment apparatus are suitable for treatment for forming a film required to have strength and lubricity under a high-temperature environment such as a turbine blade of a gas turbine engine for airplanes and a film used for building up in, for example, repair of a component.

## Claims

1. A discharge surface-treatment method of causing pulse-like electric discharge in inter-electrode gap between a discharge electrode, which is obtained by compression-molding any one of metal powder, powder of a metal compound, and powder of ceramics or a mixture of these kinds of powder, and a workpiece and forming a film made of an electrode material or a substance formed by reaction of the electrode material to thermal energy on a workpiece surface with energy of the electric discharge, the discharge surface-treatment method comprising:
a discharge detecting step of detecting occurrence of electric discharge in the inter-electrode gap; and
a current supplying step of adjusting an amount of an electric current supplied to the inter-electrode gap and a time width in response to the detection of occurrence of the electric discharge at the discharge detecting step, generating a discharge pulse current of a high current value and a short pulse width at least having rising speed equal to or higher than 40 A/µs, and performing surface treatment.

2. The discharge surface-treatment method according to claim 1, wherein the discharge pulse current of a high current value and a short pulse width having rising speed equal to or higher than 40 A/µs has a pulse width equal to or shorter than 1 microsecond.

3. The discharge surface-treatment method according to claim 1, wherein the current supplying step includes a step of connecting, in response to the detection of occurrence of the electric discharge, a second power supply in parallel to a first power supply that controls a voltage for causing electric discharge in the inter-electrode gap to be applied in a predetermined period, controlling a voltage application in a short period from the second power supply to the inter-electrode gap to feed a second discharge current having a current value higher than that of a first discharge current generated by the first power supply for a period longer than that of the first discharge current, and generating the discharge pulse current of a high current value and a short pulse width having rising speed equal to or higher than 40A/µs.

4. The discharge surface-treatment method according to claim 1, wherein the current supplying step includes a step of connecting, in response to the detection of occurrence of the electric discharge, a second power supply in parallel to a first power supply that controls a voltage for causing electric discharge in the inter-electrode gap to be applied in a predetermined period, controlling a voltage application in a short period from the second power supply to the inter-electrode gap to feed a second discharge current having a current value of 10 amperes to 20 amperes higher than that of a first discharge current generated by the first power supply for a period equal to or shorter than 1 microsecond longer than that of the first discharge current, and generating the discharge pulse current of a high current value and a short pulse width having rising speed equal to or higher than 40A/µs.

5. The discharge surface-treatment method according to claim 1, wherein the current supplying step includes a step of connecting, in response to the detection of occurrence of the electric discharge, a second power supply in parallel to a first power supply that controls a voltage for causing electric discharge in the inter-electrode gap to be applied in a predetermined period, controlling a voltage application in a short period from the second power supply to the inter-electrode gap to feed a second discharge current having a current value higher than that of a first discharge current generated by the first power supply for a short period on a front end side excluding a rear end side of a period in which the first discharge current flows, and generating the discharge pulse current of a high current value and a short pulse width having rising speed equal to or higher than 40A/µs and a discharge pulse current of a low current value and a long pulse width following the discharge pulse current.

6. The discharge surface-treatment method according to claim 1, wherein the current supplying step includes a step of connecting, in response to the detection of occurrence of the electric discharge, a second power supply in parallel to a first power supply that controls a voltage for causing electric discharge in the inter-electrode gap to be applied in a predetermined period, controlling a voltage application in a short period from the second power supply to the inter-electrode gap to feed a second discharge current having a current value of 10 amperes to 20 amperes higher than that of a first discharge current generated by the first power supply for a period equal to or shorter than 1 microsecond on a front end side excluding a rear end side of a period in which the first discharge current flows, and generating the discharge pulse current of a high current value and a short pulse width having rising speed equal to or higher than 40A/µs and a discharge pulse current of a low current value and a long pulse width following the discharge pulse current.

7. The discharge surface-treatment method according to claim 1, wherein the current supplying step includes a step of generating, in response to the detection of occurrence of the electric discharge, the discharge pulse current of a high current value and a short pulse width having rising speed equal to or higher than 40A/µs and a discharge pulse current of a low current value and a long pulse width following the discharge pulse current by switching impedance of a circuit.

8. The discharge surface-treatment method according to claim 1, wherein a material of the discharge electrode is any one of Co, Ni, and Fe and contains 40 volume % or more of the element as a metal material less easily forming carbide when the inter-electrode gap is filled with a machining fluid.

9. A discharge surface-treatment apparatus that causes pulse-like electric discharge in inter-electrode gap between a discharge electrode, which is obtained by compression-molding any one of metal powder, powder of a metal compound, and powder of ceramics or a mixture of these kinds of powder, and a workpiece and forms a film made of an electrode material or the like on a workpiece surface with energy of the electric discharge, the discharge surface-treatment apparatus comprising:
a discharge detecting unit that detects occurrence of electric discharge in the inter-electrode gap; and
a current supplying unit that adjusts a time width of a voltage applied to the inter-electrode gap and an amount of an electric current supplied to the inter-electrode gap and a time width in response to the detection of occurrence of the electric discharge by the discharge detecting unit, generates a discharge pulse current of a high current value and a short pulse width at least having rising speed equal to or higher than 40 A/µs, and performs surface treatment.

10. The discharge surface-treatment apparatus according to claim 9, wherein the discharge pulse current of a high current value and a short pulse width having rising speed equal to or higher than 40 A/µs has a pulse width equal to or shorter than 1 microsecond.

11. The discharge surface-treatment apparatus according to claim 9, wherein the current supplying unit includes:
a first power supply serving as a power supply that applies a voltage for causing electric discharge to the inter-electrode gap and controlled to feed a first discharge current in a predetermined period to the inter-electrode gap when electric discharge occurs;
a second power supply different from the first power supply; and
a unit that connects, in response to the detection of occurrence of the electric discharge, the second power supply to the inter-electrode gap in parallel to the first power supply, controls a voltage application in a short period from the second power supply to the inter-electrode gap to feed a second discharge current having a current value higher than that of the first discharge current generated by the first power supply for a period longer than that of the first discharge current, and generates the discharge pulse current of a high current value and a short pulse width having rising speed equal to or higher than 40A/µs.

12. The discharge surface-treatment apparatus according to claim 9, wherein the current supplying unit includes:
a first power supply serving as a power supply that applies a voltage for causing electric discharge to the inter-electrode gap and controlled to feed a first discharge current in a predetermined period to the inter-electrode gap when electric discharge occurs;
a second power supply different from the first power supply; and
a unit that connects, in response to the detection of occurrence of the electric discharge, the second power supply to the inter-electrode gap in parallel to the first power supply, controls a voltage application in a short period from the second power supply to the inter-electrode gap to feed a second discharge current having a current value of 10 amperes to 20 amperes higher than that of the first discharge current generated by the first power supply for a period equal to or shorter than 1 microsecond longer than that of the first discharge current, and generates the discharge pulse current of a high current value and a short pulse width having rising speed equal to or higher than 40A/µs.

13. The discharge surface-treatment apparatus according to claim 9, wherein the current supplying unit includes:
a first power supply serving as a power supply that applies a voltage for causing electric discharge to the inter-electrode gap and controlled to feed a first discharge current in a predetermined period to the inter-electrode gap when electric discharge occurs;
a second power supply different from the first power supply; and
a unit that connects, in response to the detection of occurrence of the electric discharge, the second power supply to the inter-electrode gap in parallel to the first power supply, controls a voltage application in a short period from the second power supply to the inter-electrode gap to feed a second discharge current having a current value higher than that of the first discharge current generated by the first power supply for a short period on a front end side excluding a rear end side of a period in which the first discharge current flows, and generates the discharge pulse current of a high current value and a short pulse width having rising speed equal to or higher than 40A/µs and a discharge pulse current of a low current value and a long pulse width following the discharge pulse current.

14. The discharge surface-treatment apparatus according to claim 9, wherein the current supplying unit includes:
a first power supply serving as a power supply that applies a voltage for causing electric discharge to the inter-electrode gap and controlled to feed a first discharge current in a predetermined period to the inter-electrode gap when electric discharge occurs;
a second power supply different from the first power supply; and
a unit that connects, in response to the detection of occurrence of the electric discharge, the second power supply to the inter-electrode gap in parallel to the first power supply, controls a voltage application in a short period from the second power supply to the inter-electrode gap to feed a second discharge current having a current value of 10 amperes to 20 amperes higher than that of the first discharge current generated by the first power supply for a period equal to or shorter than 1 microsecond on a front end side excluding a rear end side of a period in which the first discharge current flows, and generates the discharge pulse current of a high current value and a short pulse width having rising speed equal to or higher than 40A/µs and a discharge pulse current of a low current value and a long pulse width following the discharge pulse current.

15. The discharge surface-treatment apparatus according to claim 9, wherein the current supplying unit includes:
a power supply serving as a power supply that applies a voltage for causing electric discharge to the inter-electrode gap and controlled to feed a first discharge current in a predetermined period to the inter-electrode gap when electric discharge occurs;
a current path that can arbitrarily select a magnitude of an impedance value; and
a unit that generates, in response to the detection of occurrence of the electric discharge, the discharge pulse current of a high current value and a short pulse width having rising speed equal to or higher than 40A/µs and a discharge pulse current of a low current value and a long pulse width following the discharge pulse current by switching an impedance value of the current path.

16. The discharge surface-treatment apparatus according to claim 9, wherein a material of the discharge electrode is any one of Co, Ni, and Fe and contains 40 volume % or more of the element as a metal material less easily forming carbide when the inter-electrode gap is filled with a machining fluid.
